# EUROPEAN PATENT APPLICATION

(11) **EP 2 952 327 A1**
(43) Date of publication of application: **09.12.2015**
(21) Application number: 14745473.0
(22) Date of filing: 28.01.2014
(51) Int. Cl.: B29C 45/33, B29C 33/44, F16D 3/84, F16J 3/04, F16J 15/52, B29L 31/26

(54) **MANUFACTURING DEVICE FOR BOOT FOR CONSTANT VELOCITY JOINT, AND MANUFACTURING METHOD FOR BOOT FOR CONSTANT VELOCITY JOINT**

(30) Priority: 29.01.2013 JP 2013014674
(71) Applicant: JTEKT Corporation, Osaka-shi, Osaka 542-8502 (JP)
(72) Inventor: UENO, Hiroshi, Osaka-shi Osaka 542-8502 (JP); HAMADA, Kazuki, Osaka-shi Osaka 542-8502 (JP)
(74) Representative: TBK
(86) International application number: PCT/JP2014/051744
(87) International publication number: WO 2014/119534

(57) **Abstract**

This manufacturing device for a boot (9) for a constant velocity joint is provided with a molding die (1) for injection molding a molded body (W) using: an inner die (12) configured by radially arranging split dies (15a-15h) along the outer peripheral surface (14a) of a vertically extending core shaft (14); and an outer die (11). The manufacturing device is also provided with bar-like support members (23a-23h) having: front end sections (232a-232h) which are inserted into recesses (154a-154h) formed in the extended sections (155a-155h) of the split dies (15a-15h), thereby being capable of supporting the split dies (15a-15h); and stepped surfaces (234a-234h) which are in contact with the outer peripheral surfaces of the extended sections (155a-155h) while the split dies (15a-15h) are supported by the front end sections (232a-232h).

## Description

### Technical Field

The present invention relates to an apparatus for manufacturing a constant velocity joint boot and a method of manufacturing the same.

### Background Art

For example, in a vehicle such as an automobile, a constant velocity joint is used for transmitting torque to driving wheels moving up/down to follow a road surface. A constant velocity joint boot made of synthetic resin or like is mounted on the constant velocity joint in order to protect the constant velocity joint from external muddy water or dust and to hold lubricating grease supplied to the constant velocity joint. The constant velocity joint boot is typically constituted by a cylindrical large diameter portion, a cylindrical small diameter portion and a bellows-like portion connecting the large diameter portion and the small diameter portion with each other, and formed by a blow molding method (for example, see Patent Reference 1).

In the aforementioned blow molding method, molten resin formed into a bag-like shape is set in an outer mold, and the bag-like molten resin is expanded and pressed onto the outer mold by air blow to be thereby molded without using an inner mold. For this reason, in the blow molding method, the inner circumferential surface of the constant velocity joint boot cannot be formed accurately. Therefore, the blow molding method cannot be regarded as an optimal method for forming the constant velocity joint boot requiring an accurate bellows structure.

Therefore, the present applicant has already proposed a related art for injection-molding a constant velocity joint boot using a molding mold including an inner mold and an outer mold forming a cavity between the inner mold and the outer mold (Japanese Patent Application No. 2012-257532).

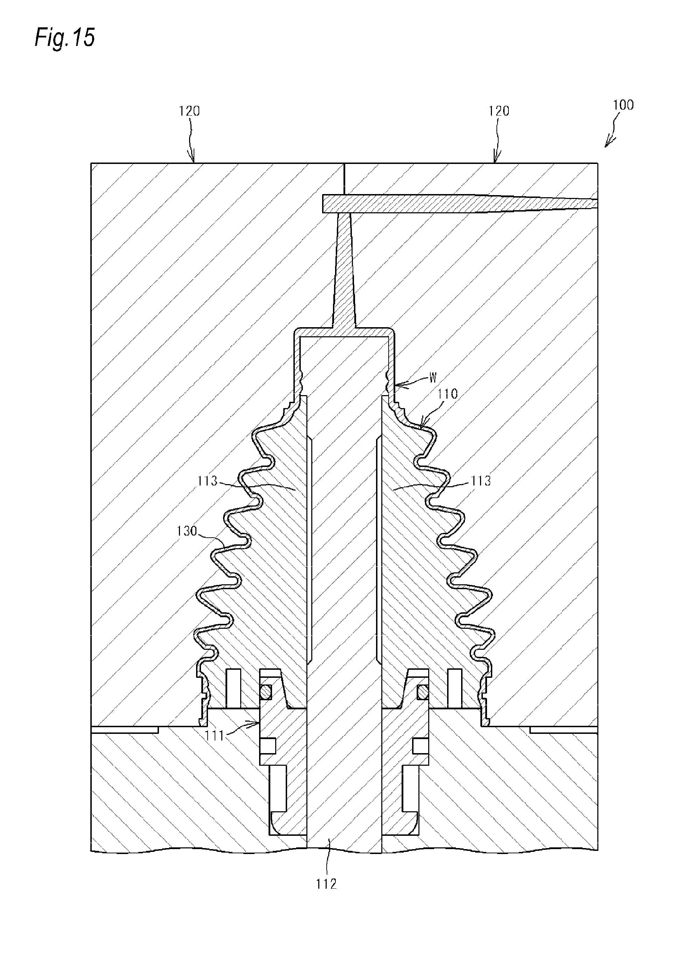

Fig. 15 is a sectional view showing the molding mold in the aforementioned related art. As shown in Fig. 15, a molding mold 100 has an inner mold 110 and a pair of left and right outer molds 120. The inner mold 110 includes a plurality of split molds 113 disposed radially along the outer circumferential surface of a core shaft 112 inserted into a set ring 111. The outer molds 120 form a cavity 130 among the outer molds 120 and the inner mold 110.

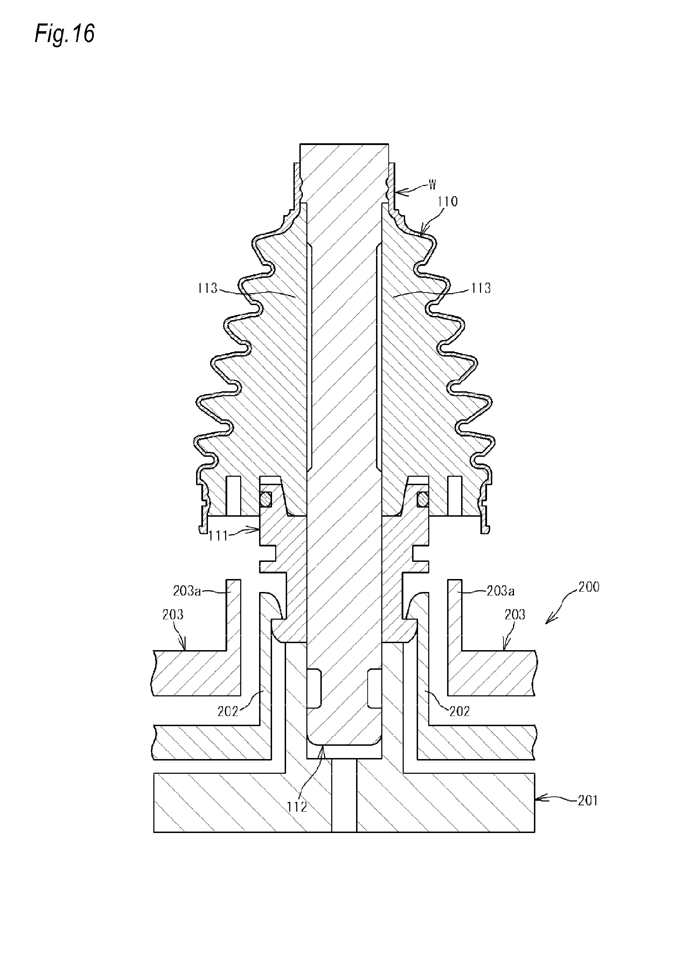

After injection-molding a molded body W for a constant velocity joint boot, the inner mold 110 is moved onto a base 201 of a disassembling/assembling machine 200 together with the moldedbodyW, as shown in Fig. 16. The disassembling/assembling machine 200 disassembles the set ring 111, the core shaft 112 and the split molds 113 in the inner mold 110, extracts the molded body W, and then assembles the inner mold 110 again.

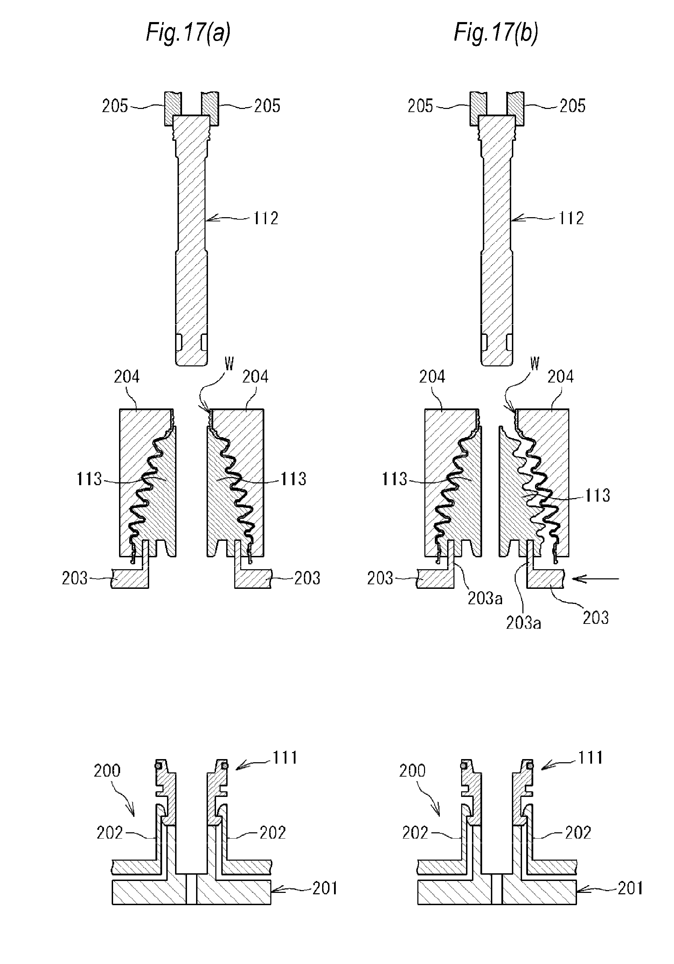

Fig. 17(a) and Fig. 17(b) are sectional views showing a procedure in which the inner mold 110 is disassembled by the disassembling/assembling machine 200. When the inner mold 110 is disassembled, retention members 202 are first engaged with the set ring 111 to retain the set ring 111 on the base 201, as shown in Fig. 16. Next as shown in Fig. 17(a), the molded body W is held by a pair of first clamps 204 after the split molds 113 are lifted up above the set ring 111 respectively by a plurality of support members 203 each formed into a sectionally L shape. In this state, the core shaft 112 is lifted up above the split molds 113 by a pair of second clamps 205. Next, in this state, the support members 203 are pushed inward radially to move the split molds 113 inward radially, respectively as shown in Fig. 17(b). Thus, the split molds 113 can be separated from the molded body W.

### Prior Art Reference

### Patent Reference

Patent Reference 1: JP-A-2009-228871

### Summary of the Invention

### Problem that the Invention is to Solve

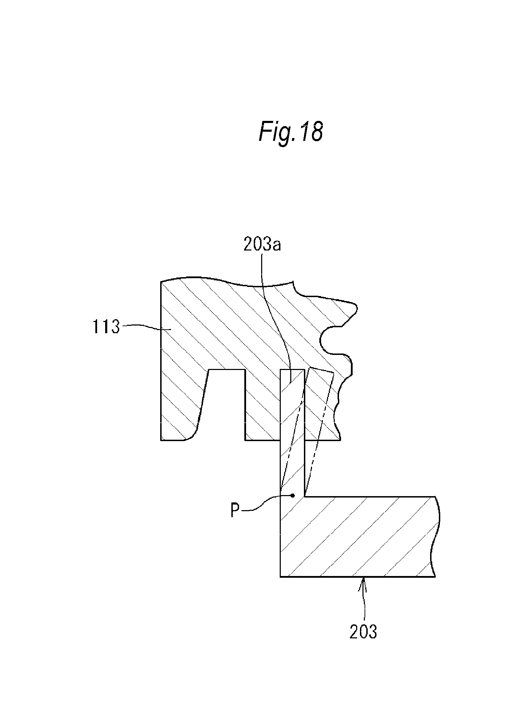

Each support member 203 in the related art is formed into a sectionally L shape. Therefore, the following problem may arise when the support member 203 is pushed inward radially as shown in Fig. 17(b). That is, when the support member 203 is pushed inward radially, a reaction force of the split mold 113 acts on a vertical portion 203a of the support member 203. Accordingly, as shown in Fig. 18, a large bending moment occurs at a support point P of the vertical portion 203a. Thus, when the operation of pushing the support member 203 inward radially is carried out repeatedly, the vertical portion 203a of the support member 203 may be bent as shown by the alternate long and two short dashes line in Fig. 18, so that the split mold 113 cannot be separated from the molded body W.

The invention has been developed in consideration of the foregoing problem. An object of the invention is to provide an apparatus for manufacturing a constant velocity joint boot and a method of manufacturing the same, capable of suppressing deformation of support members supporting split molds when the split molds are separated from a molded body.

### Means for Solving the Problem

An apparatus for manufacturing a constant velocity joint boot according to the invention includes a molding mold that injection-molds a molded body for the constant velocity joint boot using an inner mold and an outer mold, the inner mold including a plurality of split molds disposed radially along an outer circumferential surface of a core shaft extending vertically, the outer mold forming a cavity between the inner mold and the outer mold, the split molds of the inner mold being moved inward radially while being supported in a state where the core shaft is separated from the inner mold after the molded body is injection-molded, so that the split molds is separated from the molded body, characterized in that: the split molds include extension portions extending downward under the molded body; concave portions recessed inward radially are formed in outer circumferential surfaces of the extension portions; and rod-like support members include: distal end portions inserted into the concave portions of the extension portions to support the split molds; and step surfaces abutting against the outer circumferential surfaces of the extension portions in a state where the split molds are supported by the distal end portions.

In addition, a method of manufacturing a constant velocity joint boot is characterized by including, in this order, the steps of: injection-molding a molded body for the constant velocity joint boot using an inner mold and an outer mold, the inner mold including a plurality of split molds disposed radially along an outer circumferential surface of a core shaft extending vertically, the outer mold forming a cavity between the inner mold and the outer mold; separating the core shaft from the inner mold in a state where the inner mold and the outer mold have been separated; inserting distal endportions of rod-like support members into concave portions to thereby support the split molds, the concave portions formed to be recessed inward radially from outer circumferential surfaces of extension portions extending downward under the molded body in the split molds; and pushing the support members inward radially to thereby separate the split molds from the molded body in a state where step surfaces formed in the support members have been brought into contact with the outer circumferential surfaces of the extension portions.

According to the apparatus for manufacturing a constant velocity joint boot and the method of manufacturing the same according to the invention, the distal end portions of the rod-like support members are inserted into the concave portions formed in the extension portions of the split molds so that the split molds can be supported. Then, in the state where the step surfaces of the support members have been brought into contact with the outer circumferentialsurfacesofthe extension portions, the support members are pushed inward radially so that the split molds can be moved inward radially. On that occasion, reaction forces from the split molds act on the rod-like support members. However, most of the reaction forces act as compression stress in the longitudinal directions of the support members respectively. It is therefore possible to reduce occurrence of a bending moment in comparison with support members each formed into an L shape in the related art. Thus, deformation of the support members can be suppressed when the split molds are separated from the molded body for the constant velocity joint boot.

It is preferable that the concave portions and the distal end portions of the support members are formed into sectionally T shapes. In this case, when the distal end portions of the support members are inserted into the concave portions, the split molds can be supported stably.

It is preferable that the outer circumferential surfaces of the extension portions are made of a magnetic substance, and parts or all of the step surfaces are formed of permanent magnets that can be attracted to the outer circumferential surfaces of the extension portions by magnetic forces. In this case, the step surfaces of the support members can be fixed to the outer circumferential surfaces of the extension portions by the magnetic force. It is therefore possible to support the split molds more stably.

### Advantage of the Invention

According to the apparatus for manufacturing a constant velocity joint boot and the method of manufacturing the same according to the invention, deformation of the support members can be suppressed when the split molds are separated from the molded body for the constant velocity joint boot.

### Brief Description of the Drawings

[Fig. 1] Fig. 1 is a sectional view showing a part of an apparatus for manufacturing a constant velocity joint boot according to an embodiment of the invention.
[Fig. 2] Fig. 2 is a schematic plan view showing an inner mold of a molding mold of the aforementioned manufacturing apparatus.
[Fig. 3] Fig. 3 is a sectional view from the arrow direction A-A in Fig. 2.
[Fig. 4] Fig. 4 is a sectional view showing a state in which the inner mold is removed from a lower mold of the molding mold.
[Fig. 5] Fig. 5 is a sectional view showing a disassembling/assembling machine of the aforementioned manufacturing apparatus.
[Fig. 6] Fig. 6 is a sectional view showing a state in which support members of the aforementioned disassembling/assembling machine are in operation.
[Fig. 7] Fig. 7 is a plan view of the aforementioned support members.
[Figs. 8] Fig. 8 (a) is a sectional view from the arrow direction B-B in Fig. 7, and Fig. 8 (b) is a sectional view from the arrow direction C-C in Fig. 7.
[Fig. 9] Fig. 9 is a sectional view showing a state in which first clamps of the aforementioned disassembling/assembling machine are in operation.
[Fig. 10] Fig. 10 is a sectional view showing a state in which second clamps of the aforementioned disassembling/assembling machine are in operation.
[Figs. 11] Fig. 11 (a) and Fig. 11 (b) are sectional views of the disassembling/assembling machine, showing a manufacturing process of the aforementioned manufacturing apparatus.
[Figs. 12] Fig. 12 (a) and Fig. 12 (b) are sectional views of the disassembling/assembling machine, showing the manufacturing process of the aforementioned manufacturing apparatus.
[Figs. 13] Fig. 13 (a) and Fig. 13 (b) are sectional views of the disassembling/assembling machine, showing the manufacturing process of the aforementioned manufacturing apparatus.
[Figs. 14] Fig. 14(a), Fig. 14(b), Fig. 14 (c) and Fig. 14 (d) are plan views showing a procedure in which the inner mold is disassembled by the aforementioned disassembling/assembling machine.
[Fig. 15] Fig. 15 is a sectional view showing a molding mold for a constant velocity joint boot in a related art.
[Fig. 16] Fig. 16 is a sectional view showing a disassembling/assembling machine in the related art.
[Figs. 17] Fig. 17 (a) and Fig. 17 (b) are sectional views showing a procedure in which an inner mold is disassembling by the disassembling/assembling machine in the related art.
[Fig. 18] Fig. 18 is a sectional view showing a support member of the disassembling/assembling machine in the related art.

### Mode for Carrying Out the Invention

Next, a preferred embodiment of the invention will be described with reference to the accompanying drawings.

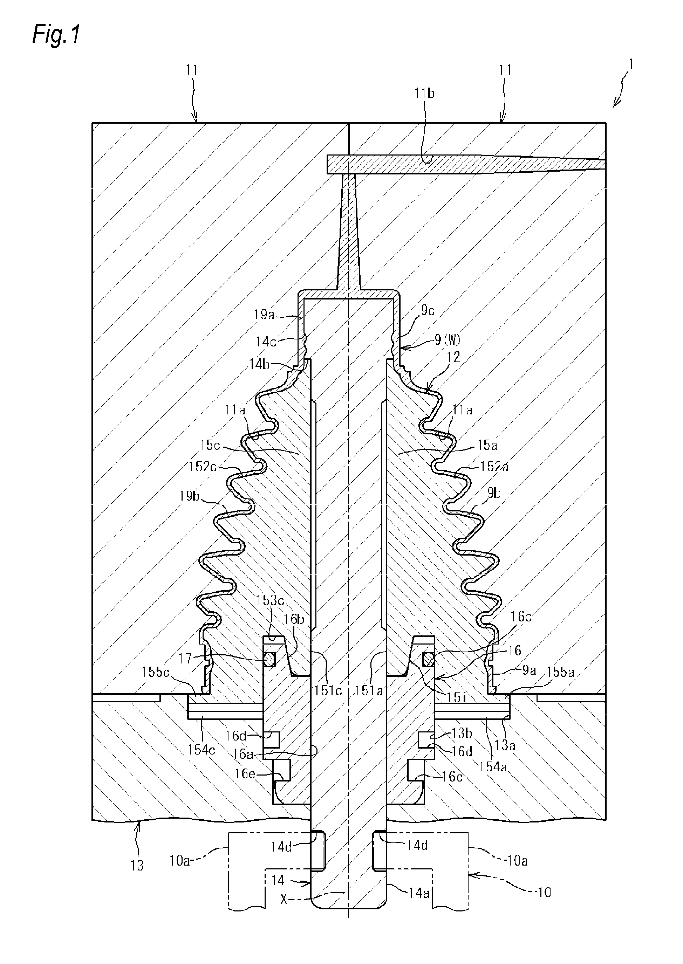

Fig. 1 is a sectional view showing a part of an apparatus for manufacturing a constant velocity joint boot according to an embodiment of the invention. This manufacturing apparatus has a molding mold 1 for injection-molding a molded body W for a constant velocity joint boot 9. The molding mold 1 is constituted by a pair of left and right outer molds 11, an inner mold 12 disposed inside the outer molds 11, and a lower mold 13 disposed under the outer molds 11. The constant velocity joint boot 9 is constituted by a large diameter portion 9a and a small diameter portion 9c, which are formed into cylindrical shapes, and a bellows-like portion 9b connecting the large diameter portion 9a and the small diameter portion 9c with each other.

The outer molds 11 are disposed movably in a horizontal direction (left/right direction in Fig. 1) on the upper surface of the lower mold 13. Mold surfaces 11a corresponding to the shapes of outer circumferential surfaces of the large diameter portion 9a, the bellows-like portion 9b and the small diameter portion 9c in the constant velocity joint boot 9 are formed in the inner side surfaces of the outer molds 11. A cavity 19b is formed between the mold surfaces 11a and mold surfaces 152a to 152h (which will be described later) of the inner mold 12. In addition, an introduction path 11b for introducing a molding material into the cavity 19b and so on is formed in the outer molds 11. Incidentally, for example, elastomer (such as thermoplastic polyester elastomer or thermoplastic polyolefinic elastomer) is used as the molding material.

A recess portion 13a is formed in the upper surface of the lower mold 13. A mounting hole 13b is formed in the recess portion 13a.

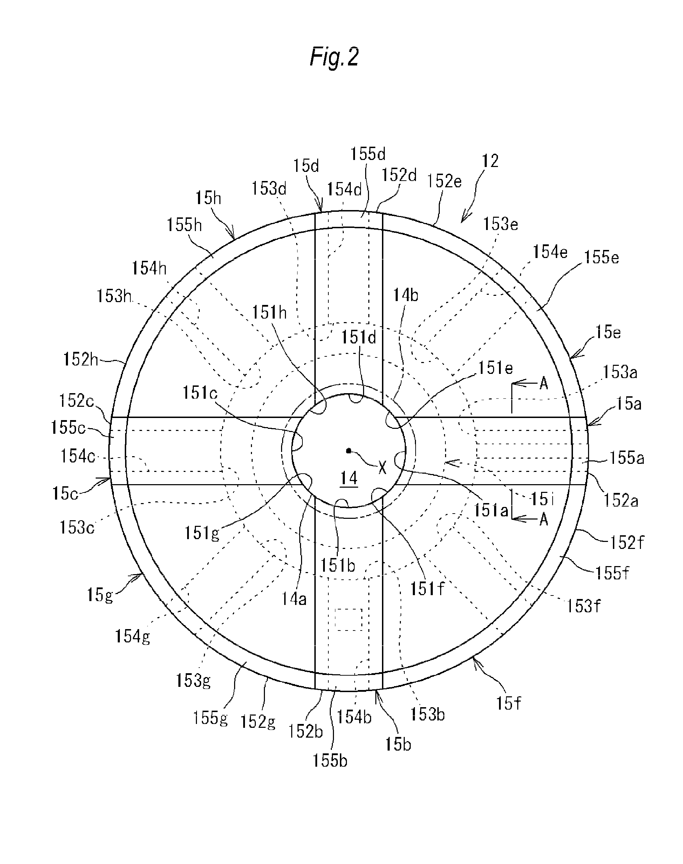

The inner mold 12 is constituted by a core shaft 14 disposed with its axis X extending vertically, a plurality of split molds 15a to 15h (see Fig. 2) disposed on the radially outer side of the core shaft 14, and a set ring 16 disposed under the split molds 15a to 15h.

The core shaft 14 includes a solid columnar member, which has a circular outer circumferential surface 14a. An annular protrusion portion 14b (pressing means) protruding to the radially outside is formed integrally with the outer circumference of the upper end portion of the core shaft 14. The lower surface of the protrusion portion 14b can abut against the upper surfaces of the split molds 15a to 15h so as to press down the upper end portions of the split molds 15a to 15h (also see Fig. 2).

Although the core shaft 14 in the embodiment is formed of a solid columnar member, the core shaft 14 may be formed of a hollow cylindrical member. Inaddition, although the pressing means includes the protrusion portion 14b provided to protrude on the core shaft 14, the pressing means may be provided as a separate body from the core shaft 14.

A mold surface 14c corresponding to the shape of the inner circumferential surface of the small diameter portion 9c in the constant velocity joint boot 9 is formed in the outer circumferential surface of the protrusion port ion 14b. A cavity 19a is formed between the mold surface 14c and the mold surfaces 11a of the outer molds 11.

A plurality of concave lock portions 14d are formed in the outer circumference of the lower end portion of the core shaft 14 integrallytherewith. Apulling-inmeans 10 forpulling the lower end portion of the core shaft 14 downward can be locked in the lock portions 14d. The pulling-in means 10 includes a plurality of hook portions 10a, which can be locked in the lock portions 14d respectively.

Fig. 2 is a schematic plan view showing the inner mold 12. In Fig. 1 and Fig. 2, the inner mold 12 includes, as the aforementioned plurality of split molds 15a to 15h, first to fourth split molds 15a to 15d formed into rectangular shapes in planar view respectively, and fifth to eighth split molds 15e to 15h formed into fan shapes in planar view respectively. The split molds 15a to 15h are disposed radially along the outer circumferential surface 14a of the core shaft 14 around the axis X of the core shaft 14. On that occasion, the split molds 15a to 15d that are rectangular in planar view and the split molds 15e to 15h that are fan-shaped in planar view are disposed circumferentially alternately so as to be formed into a circle as a whole in planar view.

In Fig. 1 and Fig. 2, inner circumferential surfaces 151a to 151h of the split molds 15a to 15h are formed into arcs respectively along the outer circumferential surface 14a of the core shaft 14. Mold surfaces 152a to 152h corresponding to the shapes of the inner circumferential surfaces of the large diameter portion 9a and the bellows-like portion 9b in the constant velocity joint boot 9 are formed in the outer circumferential surfaces of the split molds 15a to 15h respectively. Extension portions 155a to 155h extending downward under the molded body W are formed in the lower portions of the split molds 15a to 15h integrally therewith respectively. The extension portions 155a to 155h are made of a magnetic substance, and inserted into the recess portion 13a of the lower mold 13.

Engagement grooves 153a to 153h to which the upper end portion of the set ring 16 is inserted are formed in the lower surfaces of the extension portions 155a to 155h respectively. The engagement grooves 153a to 153h are formed into an annular shape as a whole in the state where the split molds 15a to 15h have been disposed into a circle in planar view as shown in Fig. 2. An annular engaged surface 15i is formed in the inner side surfaces of the engagement grooves 153a to 153h so as to be formed as a tapered surface whose diameter is reduced gradually as it goes from top to bottom. The outer side surfaces of the engagement grooves 153a to 153h are formed to face the outer circumferential surface of the set ring 16 in the state where the upper end portion of the set ring 16 has been inserted into the engagement grooves 153a to 153h.

Concave portions 154a to 154h are formed to be recessed inward radially in the outer circumferential surfaces of the extension portions 155a to 155h respectively so that distal end portions 232a to 232h of first to eighth support members 23a to 23h, which will be described later, can be inserted into the concave portions 154a to 154h respectively. Here "inward radially" may include not only a radial direction extending toward a center point on the axis X but also a direction extending toward a point slightly displaced from the center point. The concave portions 154a to 154h in the embodiment extend radially toward the center point. Incidentally the concave portions 154a to 154h have similar configurations. Therefore, only the concave portion 154a will be described in the embodiment.

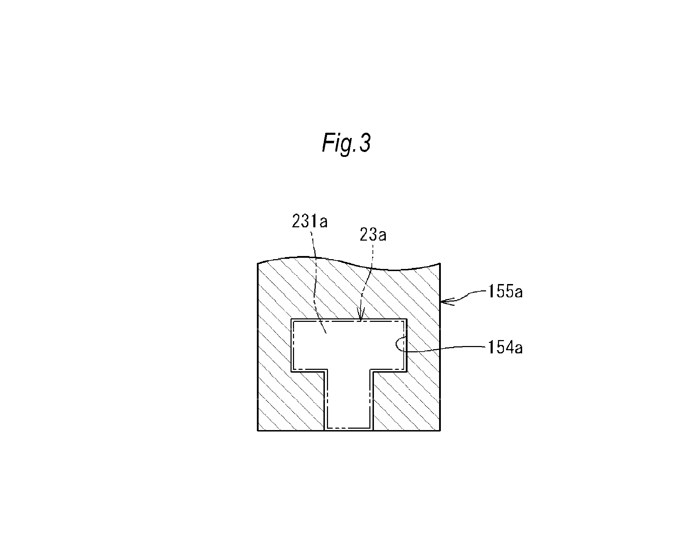

Fig. 3 is a sectional view from the arrow direction A-A in Fig. 2, showing the concave portion 154a. As shown in Fig. 2 and Fig. 3, the concave portion 154a includes a groove whose lower end is open in the lower surface of the extension portion 155a, and the concave portion 154a is formed into a sectionally T shape. In addition, the radially outer end of the concave portion 154a is open in the outer circumferential surface of the extension portion 155a, and the radially inner end of the concave portion 154a is open in the outer circumferential surface of the engagement groove 153a. The distal end portion 232a of the first support member 23a can be inserted into the concave portion 154a so as to extend from its radially outer end toward its radially inner side.

In Fig. 1, the set ring 16 is formed into a cylindrical shape as a whole, and removably attached into the mounting hole 13b of the lower mold 13. The lower portion of the core shaft 14 is inserted into the set ring 16 movably vertically on the inner circumferential surface 16a thereof. In addition, an annular engagement surface 16b is formed on the inner circumferential side of the upper end portion of the set ring 16 so that the lower end portions of the split molds 15a to 15h can be introduced and engaged to the annular engagement surface 16b in the state where the upper end portion of the set ring 16 has been inserted into the engagement grooves 153a to 153h. The engagement surface 16b is formed to have a larger diameter than the inner circumferential surface 16a, and composed of a tapered surface whose diameter is reduced gradually as it goes from top to bottom.

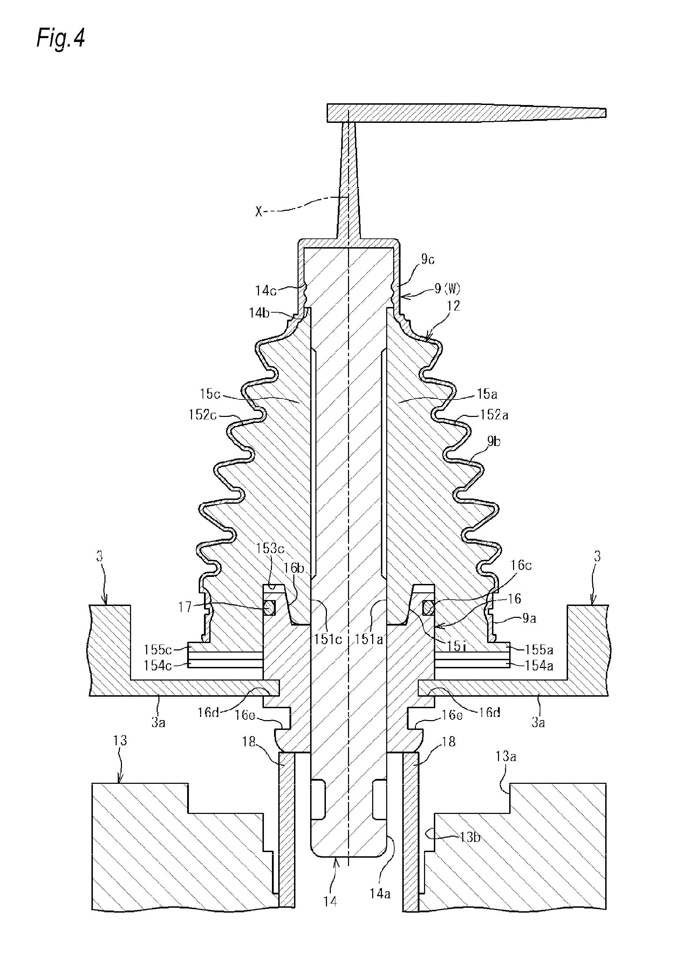

An annular groove 16c is formed in the outer circumference of the upper end portion of the set ring 16. An O-ring 17 is attached to the annular groove 16c so as to be brought into pressure contact with the outer side surfaces (opposed surfaces) of the engagement grooves 153a to 153h of the split molds 15a to 15h. Aplurality of first lock grooves 16d are formed under the annular groove 16c in the outer circumference of the set ring 16 so that a plurality of claw portions 3a (see Fig. 4) of a chuck 3 can be locked in the first lock grooves 16d respectively. In addition, a plurality of second lock grooves 16e are formed in the outer circumference of the lower end portion of the set ring 16 so that lock claws 22c of retention members 22, which will be described later, can be locked in the second lock grooves 16e respectively.

Fig. 4 is a sectional view showing a state where the inner mold 12 is removed from the lower mold 13 after injection molding. In Fig. 4, in the lower mold 13, a plurality (for example, four) of ejectors 18 formed into rod-like shapes are disposed movably vertically to push up the lower surface of the set ring 16 attached into the mounting hole 13b. As a result, as shown in Fig. 4, the lower surface of the set ring 16 can be pushed up when the ejectors 18 are moved upward after the paired outer molds 11 located in Fig. 1 are moved to the opposite left and right sides to thereby leave the inner mold 12. When the set ring 16 is pushed up in this manner, the core shaft 14, the split molds 15a to 15h and the molded body W move upward together with the set ring 16 so that the inner mold 12 can be separated upward from the lower mold 13.

Further, when the claw portions 3a of the chuck 3 locked in the first lock grooves 16d of the set ring 16 are lifted up in this state, the inner mold 12 and the molded body W can be moved to a disassembling/assembling machine 2, which will be described later.

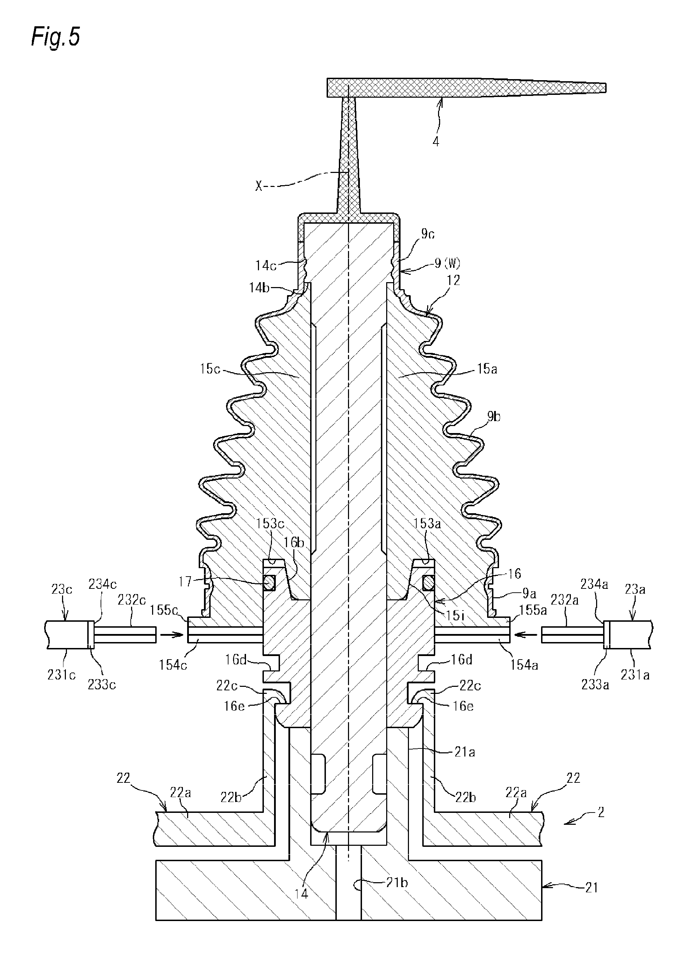

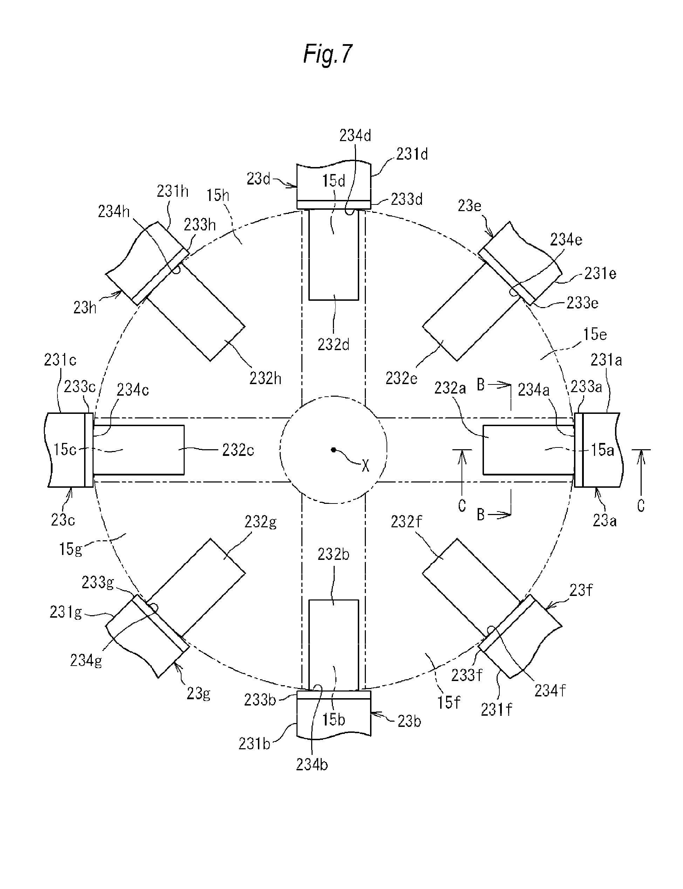

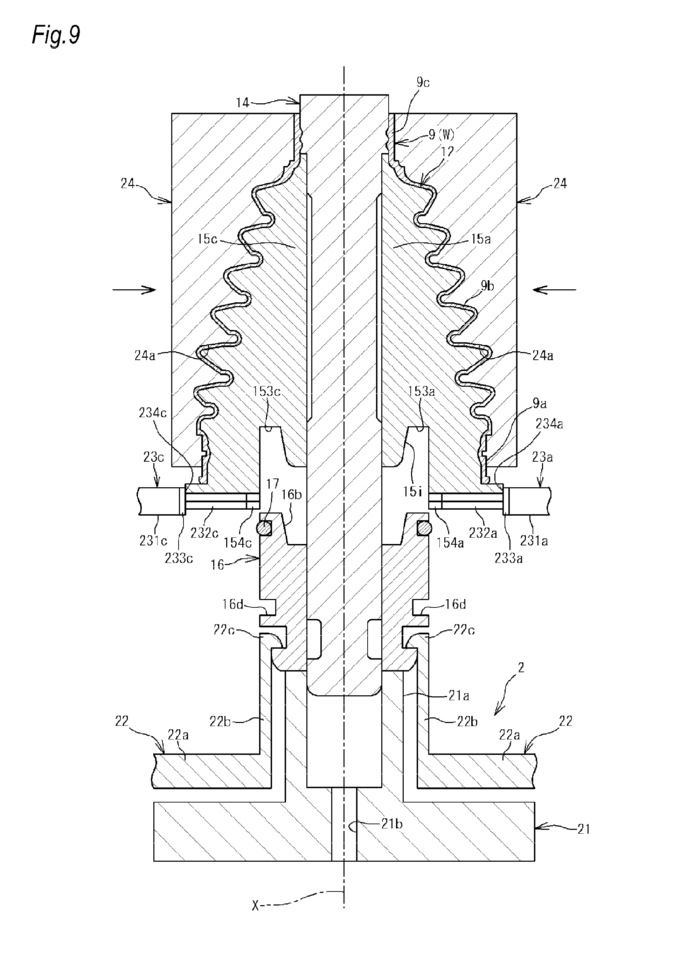

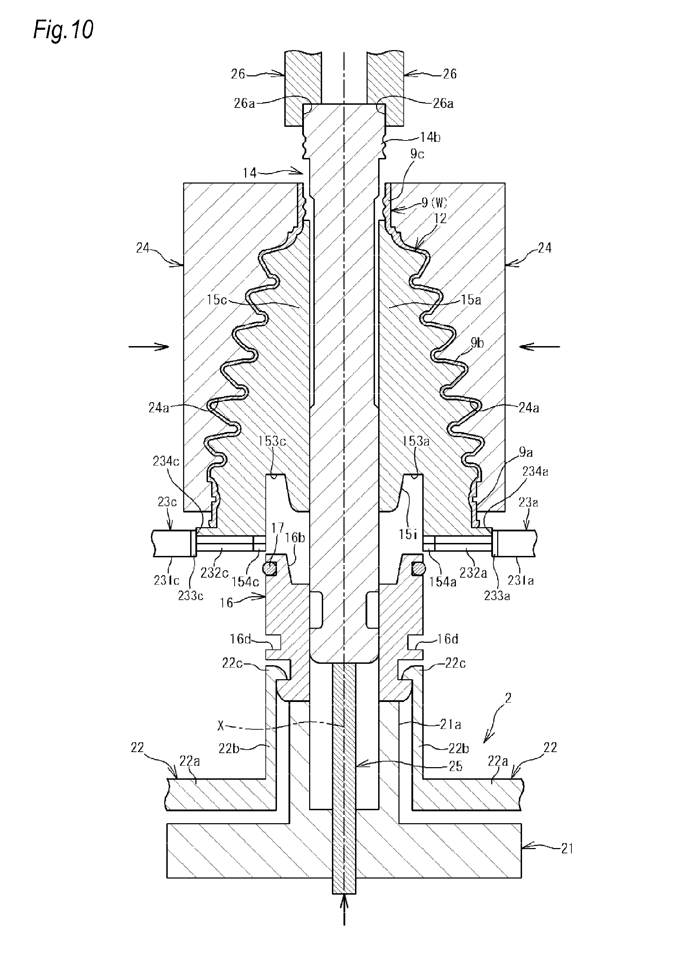

The aforementioned manufacturing apparatus is further provided with the disassembling/assembling machine 2 for disassembling and assembling the inner mold 12. Fig. 5 is a sectional view showing the disassembling/assembling machine 2. In Fig. 5, the disassembling and assembling machine 2 is to disassemble the inner mold 12 moved from the molding mold 1 by the chuck 3 and extract the molded body W from the inner mold 12, and to assemble the disassembled inner mold 12 again. The disassembling and assembling machine 2 has a base 21, a pair of retention members 22, first to eighth support members 23a to 23h (see Fig. 7), a pair of first clamps 24 (see Fig. 9), an ejector 25 (see Fig. 10), and a pair of second clamps 26 (see Fig. 10).

In Fig. 5, the base 21 includes a cylindrical portion 21a, which can support the lower end portion of the core shaft 14 inserted thereto in the state where the axis X of the core shaft 14 extends vertically. When the lower end portion of the core shaft 14 is inserted into the cylindrical portion 21a, the upper surface of the cylindrical portion 21a abuts against the lower surface of the set ring 16 to thereby restrict the downward movement of the core shaft 14. A through hole 21b is formed in the bottom portion of the cylindrical portion 21a so that the ejector 25 can be inserted to the through hole 21b from below the base 21.

The pair of retention members 22 retain the set ring 16 in the state where the set ring 16 has been disposed on the cylindrical portion 21a of the base 21. The retention members 22 are disposed above the base 21 movably in a horizontal direction (left/right direction of Fig. 5). The distal end portion of each retention member 22 is formed into a sectionally L shape, which includes a horizontal portion 22a and a vertical portion 22b. Lock claws 22c are formed in the upper end portions of the vertical portions 22b so as to be locked in the second lock grooves 16e of the set ring 16 respectively.

Incidentally, the disassembling/assembling machine 2 further includes a cutting means (not shown) for cutting a runner portion 4 (the crosshatched portion in Fig. 5) molded in the introduction path 11b of the outer molds 11 in the state of Fig. 5.

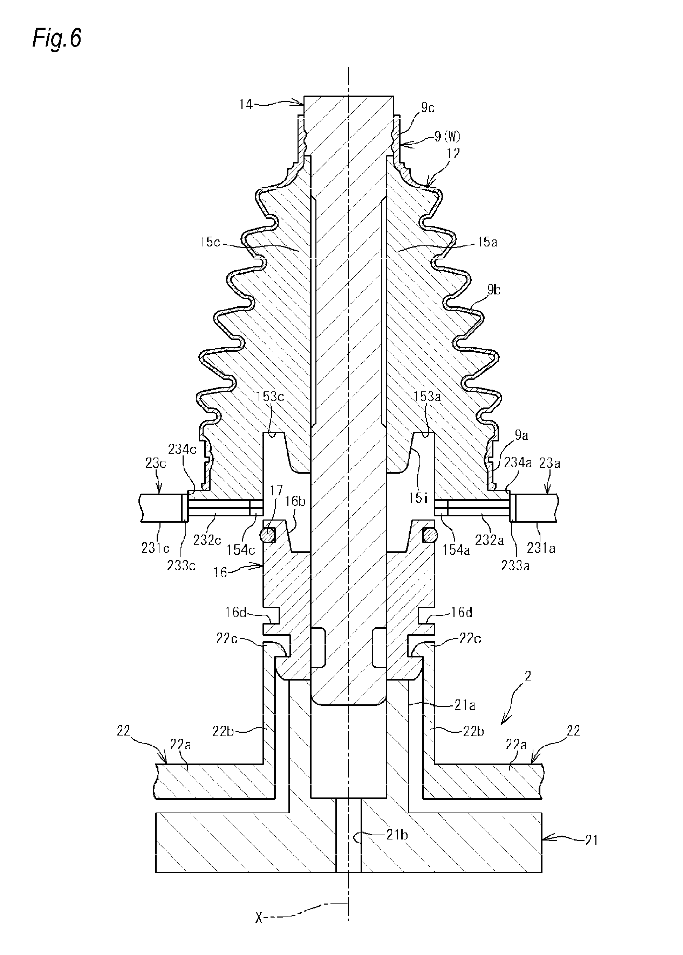

Fig. 6 is a sectional view showing the operating state of the first to eighth support members 23a to 23h in the disassembling/assembling machine 2. In Fig. 5 and Fig. 6, the first to eighth support members 23a to 23h support the respective split molds 15a to 15h that have been separated from the set ring 16. Each support member 23a to 23h can move vertically and horizontally individually, for example, by a cylinder (not shown).

Fig. 7 is a plan view of the first to eighth support members 23a to 23h. As shown in Fig. 7, the first to eighth support members 23a to 23h are disposed radially around the axis X. In addition, each support member 23a to 23h is formed into a rod-like shape, which includes a body portion 231a to 231h, a distal end portion 232a to 232h formed at the distal end of the body portion 231a to 231h integrally therewith, and a step surface 234a to 234h. Incidentally, the first to eighth support members 23a to 23h have similar configurations. Therefore, only the first support member 23a will be described in the embodiment.

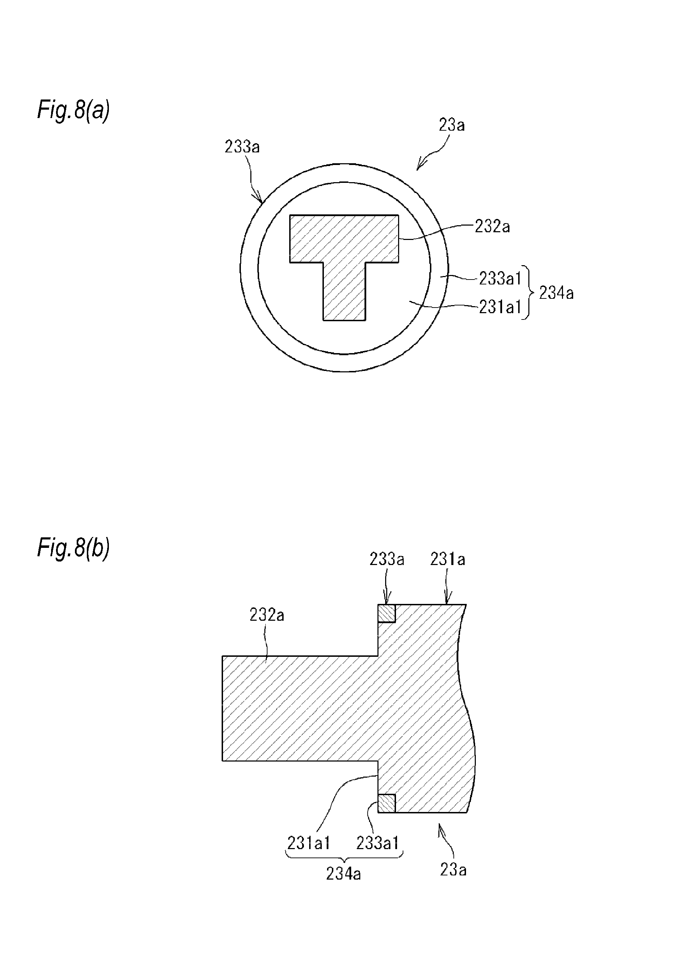

Fig. 8 (a) and Fig. 8(b) show the support member 23a. Fig. 8(a) is a sectional view from the arrow direction B-B in Fig. 7, and Fig. 8(b) is a sectional view from the arrow direction C-C in Fig. 7. In Fig. 8(a) and Fig. 8(b), the body portion 231a to 231h of the support member 23a is formed into a sectionally circular shape, and the distal end portion 232a of the support member 23a is formed into a sectionally T shape. In addition, the distal end portion 232a is formed to be slightly smaller than the sectional shape of the concave portion 154a so that the distal end portion 232a can be removably inserted into the concave portion 154a of the extension portion 155a (see Fig. 3). In addition, the longitudinal (radial) length of the distal end portion 232a is formed to be slightly shorter than the radial length of the concave portion 154a (see Fig. 6). Thus, when the distal end 232a of the support member 23a is inserted into the concave portion 154a, the support member 23a can support the first split mold 15a from below.

In Fig. 8 (a) and Fig. 8(b), a permanent magnet 233a formed into an annular plate-like shape is buried in the distal end portion of the body portion 231a. A distal end surface 233a1 of the permanent magnet 233a and a distal end surface 231a1 of the body portion 231a are formed to be flush with each other so as to form the step portion 234a. The step portion 234a abuts against the outer circumferential surface of the extension portion 155a in the state where the distal end portion 232a has supported the first split mold 15a, as described above. On that occasion, a part (end surface 233a1) of the step surface 234a is attracted and fixed to the outer circumferential surface of the extension portion 155a due to a magnetic force of the permanent magnet 233a.

Fig. 9 is a sectional view showing an operating state of the first clamps 24 of the disassembling/assembling machine 2. In Fig. 9, the pair of first clamps 24 retain the molded body W when the split molds 15a to 15h are lifted up by the support members 23a to 23h respectively. The first clamps 24 are disposed movably horizontally (left/right direction of Fig. 9) and vertically. Retention surfaces 24a corresponding to the shapes of the outer circumferential surfaces of the large diameter portion 9a, the bellows-like portion 9b and the small diameter portion 9c in the molded body W are formed in the inner side surfaces of the first clamps 24 respectively. Due to the retention surfaces 24a, the outer circumferential surface of the molded body W can be retained in the state where the outer circumferential surface of the molded body W has been nipped from the opposite left and right sides.

Fig. 10 is a sectional view showing the operating state of the ejector 25 and the second clamps 26 in the disassembling/assembling machine 2. In Fig. 10, the ejector 25 is to push up the lower surface of the core shaft 14 inserted into the cylindrical portion 21a of the base 21, and the ejector 25 includes a rod-like member that can be inserted into the through hole 21b of the base 21 from below.

The pair of second clamps 26 are to pull up the upper end portion of the core shaft 14 pushed up by the ejector 25 while holding the upper end portion of the core shaft 14. The second clamps 26 are disposed movably vertically above the first clamps 24. Engagement portions 2 6a are formed in the distal endportions of the second clamps 26 so as to be engaged with the upper end corner portions of the protrusion portion 14b of the core shaft 14 respectively. Due to the engagement portions 26a, the upper end portion of the core shaft 14 can be retained while being nipped from the opposite left and right sides.

Next, a method of manufacturing the constant velocity joint boot 9 using the aforementioned manufacturing apparatus will be described.

First, as shown in Fig. 1, in the state where the hook portions 10a of the pulling-in means 10 have been locked in the lock portions 14d of the lower end portion of the core shaft 14 respectively, the lower endportion of the core shaft 14 pulled in downward is retained in the molding mold 1 as it is. On that occasion, the protrusion portion 14b of the upper end portion of the core shaft 14 presses the split molds 15a to 15h of the inner mold 12 downward. Thus, the lower end portions of the split molds 15a to 15h move toward the axis X along the engagement surface 16b, which is a tapered surface of the set ring 16, so as to engage with the engagement surface 16b. As a result, the split molds 15a to 15h can be retained in the state where circumferentially adjacent ones of the split molds 15a to 15h have been brought into close contact with each other.

Next, the molded body W for the constant velocity joint boot 9 is injection-molded using the paired outer molds 11 and the inner mold 12 in the molding mold 1. Specifically, a molding material is introduced sequentially into the respective cavities 19a and 19b from the introduction path 11b of the outer molds 11 so as to injection-mold the molded body W. On that occasion, the runner portion 4 (see Fig. 4) is molded integrally with the molded body W in the introduction path 11b. After the injection molding of the molded body W, the aforementioned tool is removed from the lock portions 14d of the core shaft 14 so as to release the core shaft 14 from being pulling in downward.

Next, the paired outer molds 11 are moved to the opposite left and right sides in the state of Fig. 1 to be thereby separated from the inner mold 12, and the inner mold 12 is then separated from the lower mold 13. Specifically, as shown in Fig. 4, the lower surface of the set ring 16 is pushed up by the ejectors 18 so as to move the set ring 16 upward above the lower mold 13 together with the core shaft 14, the split molds 15a to 15h and the molded body W. In this state, the claw portions 3a of the chuck 3 are locked in the first lock grooves 16d of the set ring 16 so as to lift up the set ring 16. Thus, the inner mold 12 can be separated from the lower mold 13.

Next, the inner mold 12 is moved to the disassembling/assembling machine 2 together with the molded body W by the chuck 3. As shown in Fig. 5, the lower end portion of the core shaft 14 of the inner mold 12 is inserted into the cylindrical portion 21a of the base 21, and the paired retention members 22 are locked in the second lock grooves 16e of the set ring 16. Thus, the set ring 16 is retained on the base 21. In this state, the runner portion 4 molded integrally with the molded body W is cut out.

Next, in the state shown in Fig. 5, the first to eighth support members 23a to 23h are moved in the illustrated arrow directions respectively, and the distal end portions 232a to 232h of the first to eighth support members 23a to 23h are inserted into the concave portions 154a to 154h of the split molds 15a to 15h respectively. On that occasion, the distal end portions 232a to 232h are inserted until the step surfaces 234a to 234h abut against the outer circumferential surfaces of the extension portions 155a to 155h of the split molds 15a to 15h and the permanent magnets 233a to 233h are attracted onto the outer circumferential surfaces due to magnetic forces respectively. Thus, the split molds 15a to 15h can be supported by the first to eighth support members 23a to 23h respectively.

In this state, the first to eighth support members 23a to 23h are moved upward to lift up the split molds 15a to 15h respectively. On that occasion, the inner mold 12 wants to be lifted up as a whole. However, the split molds 15a to 15h and the core shaft 14 move upward relatively to the set ring 16 as shown in Fig. 6 because the set ring 16 is retained on the base 21 by the retention members 22. In this manner, the split molds 15a to 15h can be separated from the set ring 16 together with the molded body W.

Next, as shown in Fig. 9, the paired first clamps 24 are moved in the illustrated arrow directions respectively so as to hold and retain the molded body W from the opposite left and right sides. After that, as shown in Fig. 10, the ejector 25 is inserted into the through hole 21b of the base 21 from below so as to push the lower surface of the core shaft 14. On that occasion, the set ring 16 is retained by the retention members 22 while vertical movement of the split molds 15a to 15h is restricted by the first clamps 24 through the molded body W. Thus, the upper end portion of the core shaft 14 protrudes above the first clamps 24.

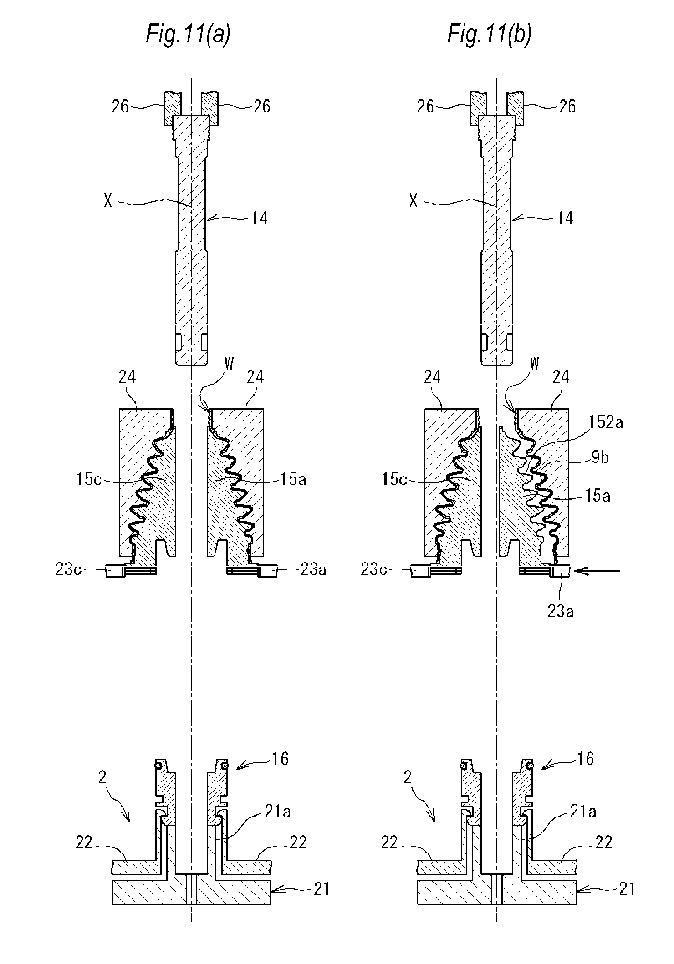

Further, in this state, the upper end portion of the core shaft 14 is kept to be nipped from the opposite left and right sides by the paired second clamps 26 while the second clamps 26 are moved upward. Thus, as shown in Fig. 11(a), the core shaft 14 can be separated from the set ring 16 and the split molds 15a to 15h. Incidentally, when the second clamps 26 are being moved upward, the first clamps 24 are also being moved upward while holding the molded body W.

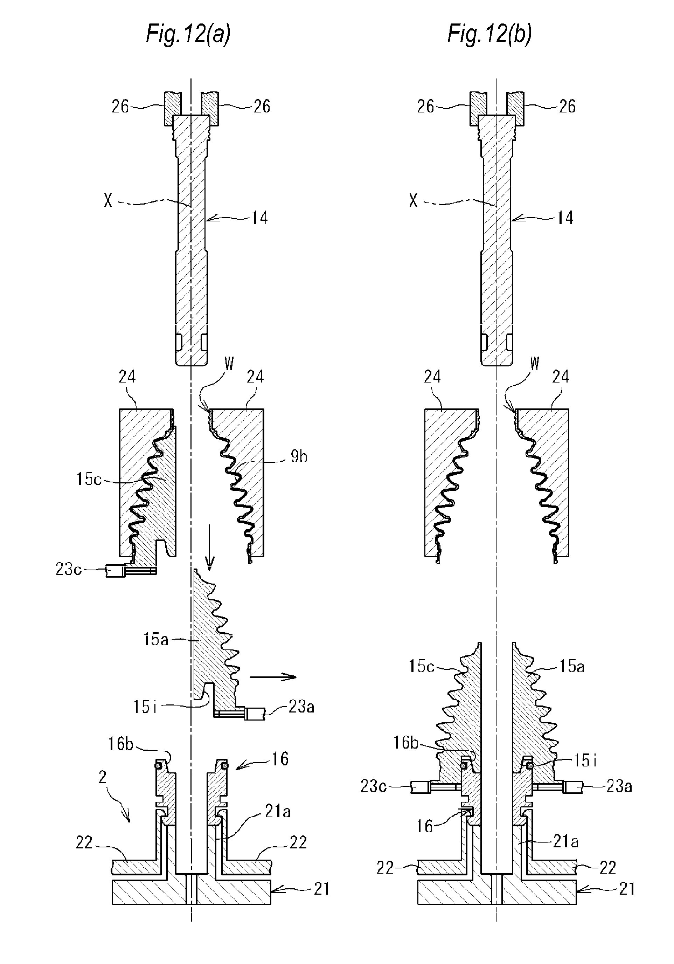

Fig. 11(a) to Fig. 13(b) are sectional views of the disassembling/assembling machine 2, showing the manufacturing process of the aforementioned manufacturing apparatus. As shown in Fig. 11(a), the split molds 15a to 15h are separated from the molded body W after the core shaft 14, the set ring 16 and the split molds 15a to 15h are separated vertically. Specifically, as shown in Fig. 11(b), the support members 23a to 23h are pushed inward radially so that the split molds 15a to 15h can be pressed inward radially by the step surfaces 234a to 234h respectively. Thus, the split molds 15a to 15h are displaced horizontally toward their center, that is, toward the axis X. On that occasion, the split molds 15a to 15h are moved to positions where the mold surfaces 152a to 152h of the split molds 15a to 15h cannot interfere with the bellows-like portion 9b of the molded body W respectively. In this manner, the split molds 15a to 15h can be separated from the molded body W. After that, as shown in Fig. 12(a), the support members 23a to 23h are moved downward to pull out the split molds 15a to 15h downward under the molded body W respectively.

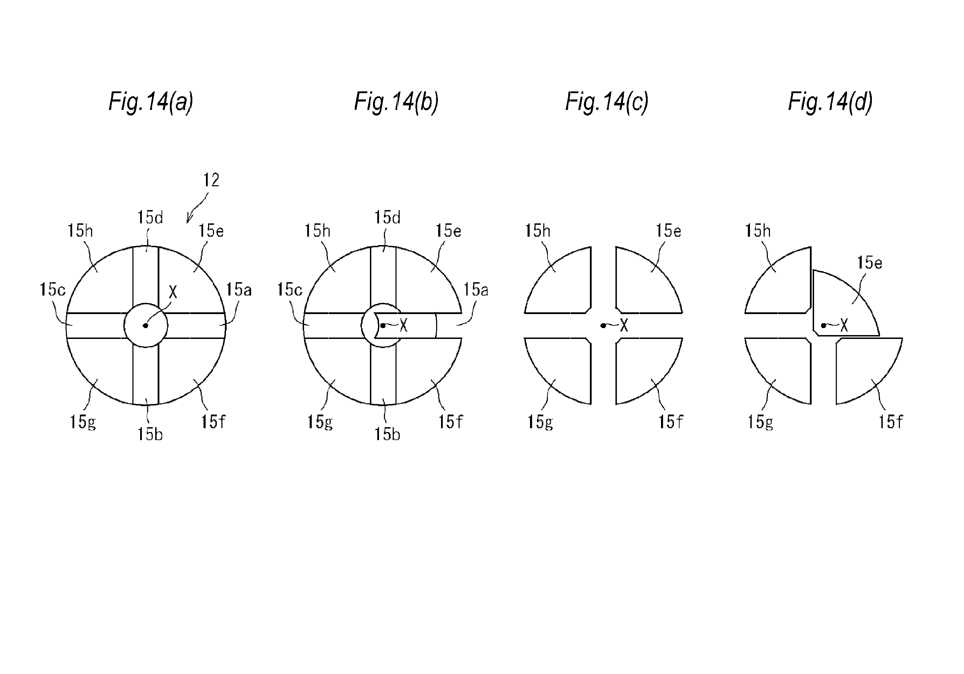

Fig. 14(a), Fig. 14(b), Fig. 14 (c) and Fig. 14 (d) are plan views showing the detailed procedure to disassemble the inner mold 12. First, as shown in Fig. 14(a), of the plurality of split molds 15a to 15h formed into a circular shape in planar view, the first to fourth split molds 15a to 15d each having a rectangular shape in planar view are separated from the molded body W. Specifically, first, the first split mold 15a is displaced horizontally toward the axis X to be thereby brought into a state shown in Fig. 14(b). In this state, the first split mold 15a is pulled out downward under the molded body W. In the same manner, the third split mold 15c, the second split mold 15b and the fourth split mold 15d are separated from the molded body W in this order, so as to be brought into a state shown in Fig. 14(c).

Next, the remaining fifth to eighth split molds 15e to 15h each having a fan shape in planar view are separated from the molded body W. Specifically, first, the fifth split mold 15e is displaced horizontally toward the axis X to be thereby brought into a state shown in Fig. 14(d). In this state, the fifth split mold 15e is pulled out downward under the molded body W. In the same manner, the seventh split mold 15g, the sixth split mold 15f and the eighth split mold 15h are separated from the molded body W in this order.

As shown in Fig. 12(a), the split molds 15a to 15h pulled out under the molded body W are moved horizontally in opposite directions to the aforementioned directions in which they were displaced horizontally by the support members 23a to 23h respectively, and then moved downward. As a result, the lower end portions of the split molds 15a to 15h are introduced into the inner circumferential side of the upper end portion of the set ring 16 while their engaged surfaces 15i move along the engagement surface 16b of the set ring 16, as shown in Fig. 12 (b) .

Incidentally, even after the split molds 15a to 15h are introduced into the set ring 16, the split molds 15a to 15h are supported by the support members 23a to 23h respectively until the completion of the downward movement of the core shaft 14, which will be described later.

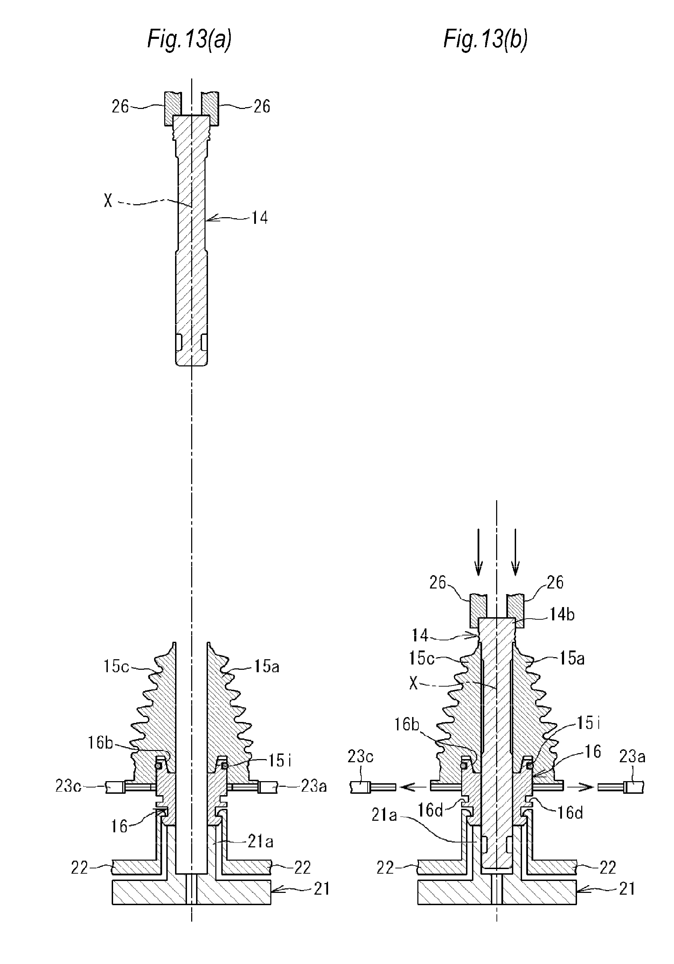

When all the split molds 15a to 15h have been introduced into the set ring 16, the first clamps 24 holding the molded body W are moved horizontally, and the molded body W is then released from being held by the first clamps 24 and extracted from the disassembling/assembling machine 2. Thus, the state shown in Fig. 12 (b) is changed to the state shown in Fig. 13(a).

Next, the core shaft 14 held by the second clamps 26 is moved downward. Thus, as shown in Fig. 13(b), the lower end portion of the core shaft 14 is inserted to the center portion of the split molds 15a to 15h formed into a circular shape in planar view, the inner circumferential surface of the set ring 16 and the inner circumferential surface of the cylindrical portion 21a of the base 21 sequentially from above.

When the core shaft 14 is inserted in this manner, the lower surface of the protrusion portion 14b of the core shaft 14 abuts against the upper surfaces of the split molds 15a to 15h so as to press the split molds 15a to 15h downward simultaneously. As a result, the lower endportions of the split molds 15a to 15h are introduced to and engaged with the engagement surface 16b which is a tapered surface of the set ring 16. On that occasion, the split molds 15a to 15h are engaged while moving toward the axis X as they move downward due to the engagement surface 16b. Thus, circumferentially adjacent ones of the split molds 15a and 15h can be brought into close contact with each other. As a result, the split molds 15a to 15h are brought into a circular shape as a whole in planar view so that the inner mold 12 can be restored to its original state.

When the inner mold 12 has been completely assembled, the support members 23a to 23h are moved outward radially against the attraction forces of the permanent magnets 233a to 233h respectively, and the distal end portions 232a to 232h of the support members 23a to 23h are pulled out from the concave portions 154a to 154h respectively. Thus, the split molds 15a to 15h are released from being supported by the support members 23a to 23h respectively (seeFig. 13(b)). Then the retention members 22 are moved outward radially to release the set ring 16 from being retained.

After that, the claw portions 3a of the chuck 3 are locked in the first lock grooves 16d of the set ring 16 again to lift up the inner mold 12 as a whole and return the inner mold 12 to its predetermined position in the molding mold 1 as shown in Fig. 4 (where the illustrated molded body W has been removed) . In the state where the inner mold 12 has been returned to the predeterminedposition, the engagement of the chuck 3 is released while the ejectors 18 are moved downward to mount the inner mold 12 into the mounting hole 13b of the lower mold 13 as shown in Fig. 1.

As has been described above, according to the apparatus for manufacturing the constant velocity joint boot 9 and the method of manufacturing the same according to the invention, the distal end portions 232a to 232h of the first to eighth support members 23a to 23h each having a rod-like shape are inserted into the concave portions 154a to 154h formed in the extension portions 155a to 155h of the split molds 15a to 15h respectively. Thus, the split molds 15a to 15h can be supported by the first to eighth support members 23a to 23h respectively. Then, in the state where the step surfaces 234a to 234h of the first to eighth support members 23a to 23h have been brought into contact with the outer circumferential surfaces of the extensionportions 155a to 155h respectively, the first to eighth support members 23a to 23h are pushed inward radially so that the split molds 15a to 15h can be moved inward radially. On that occasion, the reaction forces of the split molds 15a to 15h act on the first to eighth support members 23a to 23h each having a rod-like shape, respectively. However, most of the reaction forces act as compression stress in the longitudinal directions of the first to eighth support members 23a to 23h. It is therefore possible to reduce a bending moment in comparison with support members each formed into an L shape in the related art. As a result, the first to eighth support members 23a to 23h can be suppressed from being deformed when the split molds 15a to 15h are separated from the molded body W for the constant velocity joint boot 9.

In addition, the concave portions 154a to 154h of the split molds 15a to 15h and the distal end portions 232a to 232h of the first to eighth support members 23a to 23h are formed into sectionally T shapes respectively. Accordingly, when the distal end portions 232a to 232h are inserted into the concave portions 154a to 154h, the split molds 15a to 15h can be supported in a stable state.

In addition, the permanent magnets 233a to 233h constituting parts of the step surfaces 234a to 234h of the first to eighth support members 23a to 23h can be fixed to the outer circumferential surfaces of the extension portions 155a to 155h due to magnetic forces respectively. Accordingly, the split molds 15a to 15h can be supported in a more stable state.

Incidentally, the invention is not limited to the aforementioned embodiment, but suitable modifications may be carried out thereon. For example, the extension portions are formed in all the split molds 15a to 15h in the aforementioned embodiment. However, it will go well if such an extension portion is formed in at least one of the split molds 15a to 15h. In addition, the step surfaces 234a to 234h are constituted by the end surfaces of the permanent magnets 233a to 233h and the end surfaces of the body portions 231a to 231h respectively in the embodiment. However, each step surface 234a to 234h may be constituted by only one of the two end surfaces. Further, the extension portions 155a to 155h are entirely made of a magnetic substance in the embodiment. However, it will go well if at least the outer circumferential of each extension portion 155a to 155h is made of a magnetic substance.

In addition, each of the concave portions 154a to 154h of the split molds 15a to 15h and the distal end portions 232a to 232h of the first to eighth support members 23a to 23h is formed into a sectionally T shape in the embodiment. However, the shape may be any other sectional shape as long as it can support the split mold 15a to 15h. In addition, the concave portions 154a to 154h include grooves that are open in the lower surfaces of the extension portions 155a to 155h respectively. However, they may be holes that are not open in the lower surfaces of the extension portions 155a to 155h.

The present application is based on a Japanese patent application (Japanese Patent Application No. 2013-014674) filed on January 29, 2013, the contents of which are incorporated herein by reference.

### Industrial Applicability

According to the invention, it is possible to obtain an apparatus for manufacturing a constant velocity joint boot and a method of manufacturing the same, capable of suppressing deformation of support members supporting split molds when the split molds are separated from a molded body.

### Description of Reference Numerals and Signs

1: molding mold, 9: constant velocity joint boot, 11: outer mold, 12: inner mold, 14: core shaft, 15a: first split mold, 15b: second split mold, 15c: third split mold, 15d: fourth split mold, 15e: fifth split mold, 15f: sixth split mold, 15g: seventh split mold, 15h: eighth split mold, 19b: cavity, 23a: first support member, 23b: second support member, 23c: third support member, 23d: fourth support member, 23e: fifth support member, 23f: sixth support member, 23g: seventh support member, 23h: eighth support member, 154a to 154h: concave portion, 155a to 155h: extension portion, 232a to 232h: distal end portions, 233a to 233h: permanent magnet; 234a to 234h: step surface, W: molded body

## Claims

1. An apparatus for manufacturing a constant velocity joint boot, the apparatus comprising a molding mold that injection-molds a molded body for the constant velocity joint boot using an inner mold and an outer mold, the inner mold including a plurality of split molds disposed radially along an outer circumferential surface of a core shaft extending vertically, the outer mold forming a cavity between the inner mold and the outer mold, the split molds of the inner mold being supported and moved inward radially in a state where the core shaft is separated from the inner mold after the molded body is injection-molded, so that the split molds is separated from the molded body, **characterized in that**:
the split molds include extension portions extending downward under the molded body;
concave portions recessed inward radially are formed in outer circumferential surfaces of the extension portions; and
rod-like support members include: distal end portions inserted into the concave portions of the extension portions to support the split molds; and step surfaces abutting against the outer circumferential surfaces of the extension portions in a state where the split molds are supported by the distal end portions.

2. The apparatus for manufacturing the constant velocity joint boot according to claim 1, wherein the concave portions and the distal end portions of the support members are formed into sectionally T shapes.

3. The apparatus for manufacturing the constant velocity joint boot according to claim 1 or 2, wherein:
the outer circumferential surfaces of the extension portions are made of a magnetic substance; and
parts or all of the step surfaces are formed of permanent magnets that can be attracted to the outer circumferential surfaces of the extension portions by magnetic forces.

4. A method of manufacturing a constant velocity joint boot, the method **characterized by** comprising, in this order, the steps of:
injection-molding a molded body for the constant velocity joint boot using an inner mold and an outer mold, the inner mold including a plurality of split molds disposed radially along an outer circumferential surface of a core shaft extending vertically, the outer mold forming a cavity between the inner mold and the outer mold;
separating the core shaft from the inner mold in a state where the inner mold and the outer mold have been separated;
inserting distal end portions of rod-like support members into concave portions to thereby support the split molds, the concave portions formed to be recessed inward radially from outer circumferential surfaces of extension portions extending downward under the molded body in the split molds; and
pushing the support members inward radially to thereby separate the split molds from the molded body in a state where step surfaces formed in the support members have been brought into contact with the outer circumferential surfaces of the extension portions.
